(19) Europäisches Patentamt
European Patent Office
Office européen des brevets

(11) **EP 3 006 248 B1**

(12) **FASCICULE DE BREVET EUROPEEN**

(45) Date de publication et mention
de la délivrance du brevet:
**03.02.2021 Bulletin 2021/05**

(51) Int Cl.:
***B60K 6/48*** *(2007.10)*      ***B60K 6/547*** *(2007.10)*
***B60W 20/00*** *(2016.01)*      ***B60W 40/12*** *(2012.01)*

(21) Numéro de dépôt: **15185799.2**

(22) Date de dépôt: **18.09.2015**

(54) **PROCÉDÉ DE DÉTERMINATION DU MODE CINÉMATIQUE D'UNE TRANSMISSION HYBRIDE**

VERFAHREN ZUR BESTIMMUNG DES KINEMATISCHEN MODUS EINER HYBRIDÜBERTRAGUNG

METHOD FOR DETERMINING THE DRIVE MODE OF A HYBRID DRIVE TRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2014 FR 1459548**

(43) Date de publication de la demande:
**13.04.2016 Bulletin 2016/15**

(73) Titulaire: **Renault S.A.S.**
**92100 Boulogne-Billancourt (FR)**

(72) Inventeurs:
- **VESPASIEN, Jean-Marie**
  **94600 Choisy-le-Roi (FR)**
- **TRINQUECOSTES, Valérie**
  **91850 Bouray-sur-Juine (FR)**

(56) Documents cités:
**DE-A1- 10 133 695**      **DE-A1-102008 041 985**
**DE-A1-102012 024 677**

**Description**

La présente invention se rapporte au contrôle des transmissions hybrides de véhicule automobile.

Elle concerne le contrôle du mode cinématique d'une transmission hybride comprenant une boîte de vitesses à rapports discrets rassemblant les couples d'au moins un moteur thermique et une machine électrique, en direction des roues du véhicule.

Plus précisément, cette invention a pour objet un procédé de détermination du mode cinématique courant d'une transmission hybride qui regroupe sur un différentiel de sortie vers les roues du véhicule, une chaîne de traction thermique transmettant le couple d'un moteur thermique sur des rapports discrets de réduction établis par un premier réducteur, et une chaîne de traction électrique transmettant le couple d'une machine électrique sur plusieurs rapports discrets de réduction, établis par un deuxième réducteur.

Dans la plupart des boîtes de vitesses, les changements de rapport dépendent du déplacement à l'intérieur de la boîte, de crabots actionnés par un mécanisme de commande interne à partir des instructions du conducteur. Ces crabots commandent le couplage et le découplage de pignons de vitesses, avec ou sans l'intervention de moyens de synchronisation. Leur position détermine le rapport engagé. Elle peut être contrôlée par des capteurs, renvoyant l'information de rapport courant sur un organe de contrôle, tel qu'un calculateur de transmission. Mais la fiabilité de cette information n'est pas assurée en cas de défaillance ou de dérive de mesure des capteurs, ou encore de casse mécanique dans la boîte.

Sur un véhicule thermique disposant, comme seule source d'énergie motrice, d'un moteur thermique relié aux roues du véhicule par une boîte de vitesses à rapports discrets, le rapport courant se déduit directement du ratio entre le régime primaire et le rapport secondaire de celle-ci. La cohérence de cette seule information avec la position supposée des crabots dans la boîte, suffit pour vérifier le rapport engagé.

Dans les groupes motopropulseurs (GMP) hybrides, où la boîte de vitesses rassemble les couples d'au moins un moteur thermique et une machine électrique, la cinématique est plus complexe, car le mode cinématique courant dépend à la fois de l'état des éléments de couplage de la chaîne de traction électrique, et de la chaîne de traction thermique.

Par la publication WO2012/131259, on connaît une transmission hybride pour véhicule automobile constituée principalement d'un moteur thermique et d'une machine électrique d'entraînement, comportant deux arbres primaires concentriques portant chacun au moins un pignon de descente sur un arbre secondaire relié aux roues du véhicule. Cette transmission présente un premier moyen de couplage entre les deux arbres primaires pouvant occuper trois positions dans lesquelles :

-    le moteur thermique est découplé de la chaîne cinématique reliant la machine électrique aux roues,
-    le moteur thermique entraîne les roues indépendamment de la machine électrique,
-    le moteur thermique et la machine électrique sont couplés de manière à additionner en direction des roues leurs couples respectifs.

Il y a également trois positions pour relier directement l'arbre primaire lié au moteur électrique et l'arbre secondaire :

-    le moteur électrique n'est pas directement couplé au secondaire,
-    le moteur électrique est directement lié au secondaire avec un 1$^{er}$ rapport, ou
-    le moteur électrique est directement lié au secondaire avec un 2$^{ème}$ rapport.

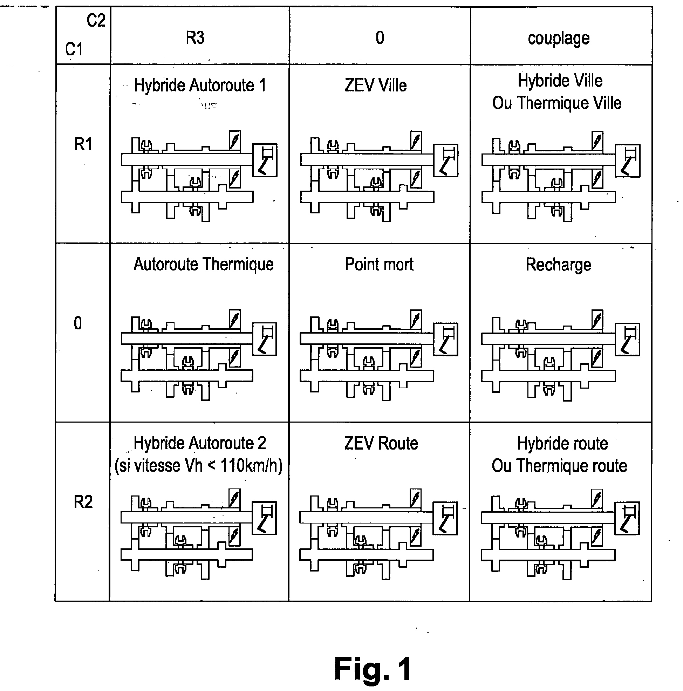

En combinant les trois positions de chaque coupleur, une telle transmission dispose en tout de neuf modes cinématiques, illustrés par la figure 1 : un point mort, deux rapports électriques intitulés « *ZEV ville* » et « *ZEV* route », deux rapports hybrides ou thermiques intitulés respectivement « *Hybride ville* ou *Thermique Ville* » et « *Hybride Route* ou *Thermique Route* », un rapport thermique intitulé « *Autoroute Thermique* », deux modes hybrides intitulés respectivement « *Hybride Autoroute 1* » et « *Hybride Autoroute 2* » et un mode « *Recharge* ». Ces états sont établis en fonction de l'activation d'un moteur thermique et/ou d'une machine électrique, et de la position des deux coupleurs placés respectivement sur un arbre primaire et sur un arbre secondaire de la boîte.

La publication DE 10 2008 041985 décrit une autre transmission hybride comprenant une chaîne de traction thermique transmettant le couple d'un moteur thermique sur des rapports de réduction discrets, et une chaîne de traction électrique transmettant le couple d'une machine électrique sur des rapports discrets. Le mode cinématique de cette transmission peut être identifié par des capteurs qui détectent l'état de chaque chaîne de traction.

Dans de telles transmissions, le passage d'un mode cinématique à un autre, repose essentiellement sur le pilotage des moyens de couplage, dont la position peut être renseignée par des capteurs. Pour assurer la sécurité de fonctionnement de la transmission, une défaillance éventuelle de capteur doit pouvoir être détectée à chaque instant.

La présente invention vise à vérifier le mode cinématique courant d'un GMP hybride, par observation de la vitesse d'éléments tournants.

Dans ce but, elle propose que le mode cinématique soit identifié par l'état d'un vecteur à au moins deux composantes, représentant le rapport de réduction réalisé sur chaque chaîne de traction de la transmission.

Les composantes de ce vecteur prennent des valeurs de référence sur chaque rapport réalisé par les chaînes de traction, au sein de deux familles de rapports discrets réalisables.

La présente invention sera mieux comprise à la lecture de la description suivante d'un mode de réalisation non limitatif de celle-ci, en se reportant aux dessins annexés, sur lesquels :

- la figure 1 illustre les modes cinématiques d'une transmission hybride connue,
- la figure 2 est un schéma de modélisation général de transmission hybride, et
- la figure 3 illustre la méthode proposée.

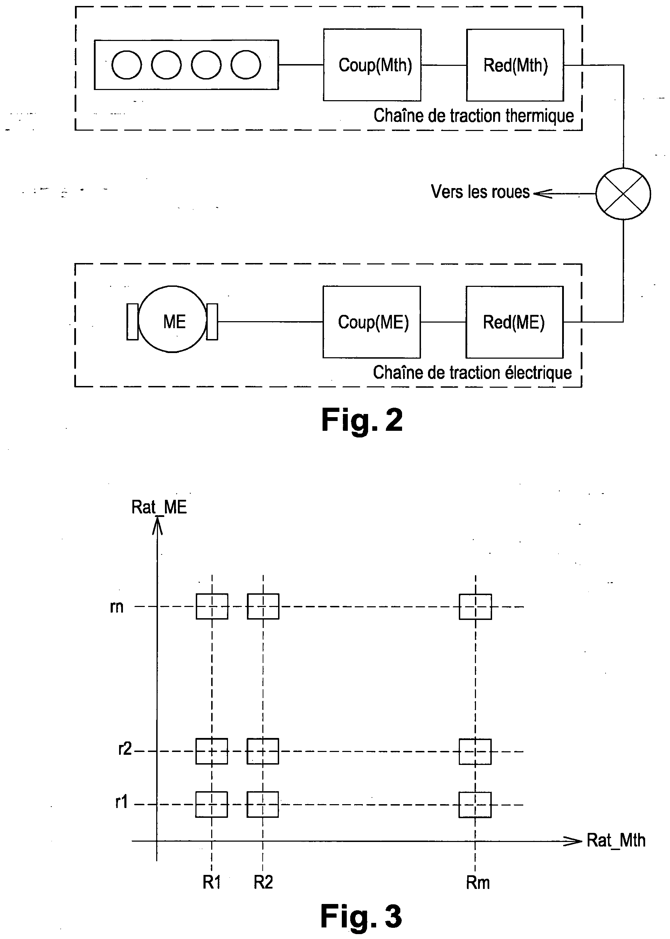

Un GMP hybride réunissant un moteur thermique, une machine électrique, et une boîte de vitesses à rapports discrets, peut être modélisé selon le schéma de la figure 2. On distingue une chaîne de traction thermique comprenant le moteur thermique *Mth*, relié à un réducteur *Red(Mth)* par un moyen de couplage *Coup(Mth)*, une chaîne de traction électrique comprenant la machine électrique *ME*, reliée à un réducteur *Red(ME)* par un moyen de couplage **Coup***(ME)*, et un différentiel rassemblant le mouvement des deux chaînes de traction en direction des roues. Selon ce modèle, la transmission regroupe sur un différentiel de sortie vers les roues du véhicule, une chaîne de traction transmettant le couple d'un moteur thermique sur des rapports discrets de réduction établis par un premier réducteur, et une chaîne de traction électrique transmettant le couple d'une machine électrique sur plusieurs rapports de réduction discrets établis par un deuxième réducteur.

La méthode proposée permet de déterminer le mode cinématique courant de toute transmission hybride modélisable dans le même schéma, comme en particulier, celle de la publication WO 2012/131259. Les liens entre les différents éléments constituant cette chaîne de traction hybride, sont des liens mécaniques. A chacun des rapports discrets réalisables par le réducteur de la chaîne thermique *Red(Mth)*, on sait affecter un ratio de réduction de celle-ci, *Rat_Mth* appartenant à une première famille : (0, R1, R2, ..., Rm). De même, à chacun des rapports discrets réalisables par le réducteur de la chaîne électrique *Red(ME)*, on sait affecter un autre ratio de réduction *Rat_ME*, qui prend une valeur appartenant à une deuxième famille (0, r1, r2, ..., rn) . Les composantes *[Ratio_Mth]* et *[Ratio_ME]* du vecteur prennent des valeurs de référence sur chaque rapport réalisé par les deux chaînes de traction, au sein de chaque famille de rapports discrets réalisables.

Chaque mode cinématique de la transmission se définit par la combinaison de grandeurs d'état identifiant la configuration du GMP. Dans le cas où le moteur thermique et la machine électrique sont reliés à la boîte de vitesses par un coupleur d'entrée, le mode cinématique peut être représenté par un vecteur du type *[Etat_coupleur_Mth ; Ratio_Mth ; Etat_coupleur_ME ; Ratio_ME]*, incluant l'état des deux coupleurs d'entrée. Quelle que soit sa dimension, l'exploitation de ce vecteur réalise un capteur logiciel de l'état des actionneurs de la transmission.

Lorsque les coupleurs d'entrée sont fermés, ou bien dans le cas particulier où le GMP hybride en est dépourvu (comme dans l'exemple cité), une liaison mécanique directe est établie entre les moteurs et leurs réducteurs). Le vecteur qui permet d'identifier le mode cinématique de la transmission n'a plus que deux composantes : *[Ratio_Mth ; Ratio_ME]*, représentant le rapport de réduction sur chacune des deux chaînes de traction.

En appelant *N_Mth,* le régime de rotation du moteur thermique, *N_ME* le régime de rotation du moteur électrique, et *N_Roues* le régime de rotation des roues motrices du véhicule, les ratios s'écrivent :

*Rat_Mth = N_Mth/N_Roues* et *Rat_ME = N_ME/N_Roues.*

Si le GMP peut prendre m valeurs de ratio thermique et n valeurs de ratio électrique, les modes cinématiques se déduisent de la matrice de la figure 3. Cette matrice, traduit les résultats du capteur logiciel. Dans le cas d'une transmission à deux arbres parallèles (arbre primaire et arbre secondaire), ce capteur peut se baser sur les trois informations suivantes :

- le régime de l'arbre primaire (= régime du moteur thermique), nommé *Nprim,*
- le régime de la machine électrique, nommé *Nme,* et
- le régime de l'arbre secondaire, nommé *Nsec.*

Le mode cinématique courant peut ainsi être identifié à partir de l'observation du régime de rotation du moteur thermique *(N-Mth),* du régime de rotation de la machine électrique *(N_ME),* et du régime de rotation des roues *(N_Roues)* du véhicule.

En se référant à l'exemple de la figure 1, le véhicule peut être immobilisé (Nsec = 0) dans plusieurs des modes cinématiques identifiés, en particulier :

- ZEV ville

- ZEV route

- Neutre

- Recharge

L'observation des trois régimes *Nprim, Nme, Nsec,* ne suffit donc pas pour identifier le mode cinématique établi dans cette transmission à vitesse nulle. En revanche, lorsque le véhicule est en déplacement, on peut s'appuyer sur le capteur logiciel pour déterminer le mode cinématique courant sur la seule base des deux ratios suivants :

$$Rat_1 = \frac{N_{me}}{N_{sec}} = Rat\_ME, \quad \text{et} \quad Rat_2 = \frac{N_{prim}}{N_{sec}} = Rat\_Mth$$

Dans la transmission citée, on appelle R1, R2 et R3 les rapports de démultiplication pour chaque position de crabotage des trois pignons fous. Les deux ratios sont identifiés sur chaque rapport réalisable par les chaînes de traction. Ils sont nuls au neutre et en mode recharge. Le premier ratio est inopérant en mode thermique (« *thermique autoroute* »), tandis que le deuxième est inopérant en mode électrique, puisque les chaînes de traction correspondantes sont inactives. La détermination du mode cinématique courant s'effectue en comparant les ratios opérants *[Ratio_Mth]* et *[Ratio_ME],* calculés à partir des trois régimes observés *(N-Mth), (N_ME)* et *(N_Roues) (N_Roues),* à la table de valeurs ci-dessous. Cette table indique les modes où l'un des ratios est inopérant. Dans les autres cas, elle donne la valeur des ratios de réduction imposés aux chaînes de traction par la position des crabots :

| Mode cinématique | Rat$_1$ | Rat$_2$ |
|---|---|---|
| Neutre | 0 | 0 |
| Recharge | 0 | 0 |
| ZEV ville | R1 | |
| ZEV route | R2 | - |
| Hybride ville | R1 | R1 |
| Hybride route | R2 | R2 |
| Thermique autoroute | - | R3 |
| Hybride autoroute 1 | R1 | R3 |
| Hybride autoroute 2 | R2 | R3 |

En conclusion, l'invention propose une méthode d'observation des états, ou modes cinématiques, courants d'une transmission hybride. Cette méthode repose sur la création d'un « capteur logiciel », à plusieurs dimensions. Elle permet de détecter toute anomalie dans l'information délivrée par des capteurs de boîte, notamment la défaillance d'un des capteurs de position des crabots, sans doubler ces capteurs. L'impact de cette invention en termes de sécurité de fonctionnement, de coût, et d'intégration mécanique, est considérable.

**Revendications**

1. Procédé de détermination du mode cinématique courant d'une transmission hybride comprenant une chaîne de traction transmettant le couple d'un moteur thermique sur des rapports discrets de réduction établis par un premier réducteur, une chaîne de traction électrique transmettant le couple d'une machine électrique sur plusieurs rapports de réduction discrets établis par un deuxième réducteur, et un différentiel de sortie rassemblant le mouvement des deux chaînes de traction en direction des roues, dans lequel le mode cinématique courant est identifié à partir de l'observation du régime de rotation du moteur thermique *N-Mth,* du régime de rotation de la machine électrique *N_ME* et du régime de rotation des roues *N_Roues* du véhicule, et prend la forme d'un vecteur du type *[Etat_coupleur_Mth ; Ratio_Mth ; Etat_coupleur_ME ; Ratio_ME]* incluant l'état d'un coupleur d'entrée du moteur thermique et de la machine électrique dans la transmission et les ratios de réduction des deux chaînes de traction, le mode cinématique courant étant identifié en comparant les ratios *[Ratio_Mth]* et *[Ratio_ME]* calculés à partir des régimes observés *N-Mth, N_ME* et *N_Roues,* à une table de valeurs de réduction imposée aux chaînes de traction par la position de coupleurs contrôlant l'établissement des rapports réalisables en mode thermique, en mode électrique et en mode hybride.

**2.** Procédé de détermination selon la revendication 1, **caractérisé en ce que** les composantes *[Ratio_Mth]* et *[Ratio_ME]* du vecteur prennent des valeurs de référence sur chaque rapport réalisé par les deux chaînes de traction, au sein de deux familles de rapports discrets réalisables.

**Patentansprüche**

**1.** Verfahren zur Bestimmung des aktuellen kinematischen Modus eines Hybridgetriebes, das einen Antriebsstrang, der das Drehmoment eines Verbrennungsmotors auf getrennte Untersetzungsverhältnisse überträgt, die von einem ersten Untersetzungsgetriebe erstellt werden, einen elektrischen Antriebsstrang, der das Drehmoment einer elektrischen Maschine auf mehrere getrennte Untersetzungsverhältnisse überträgt, die von einem zweiten Untersetzungsgetriebe erstellt werden, und ein Ausgangsdifferential enthält, das die Bewegung der zwei Antriebsstränge in Richtung der Räder zusammenfasst, wobei der aktuelle kinematische Modus ausgehend von der Beobachtung der Drehzahl des Verbrennungsmotors N-Mth, der Drehzahl der elektrischen Maschine N ME und der Drehzahl der Räder N_Räder des Fahrzeugs erkannt wird und die Form eines Vektors des Typs [Zustand_Koppler_Mth; Verhältnis_Mth; Zustand_Koppler_ME; Verhältnis_ME] annimmt, der den Zustand eines Eingangskopplers des Verbrennungsmotors und der elektrischen Maschine im Getriebe und die Untersetzungsverhältnisse der zwei Antriebsstränge enthält, wobei der aktuelle kinematische Modus durch Vergleich der Verhältnisse [Verhältnis_Mth] und [Verhältnis_ME], die ausgehend von den beobachteten Drehzahlen N-Mth, N_ME und N_Räder berechnet werden, mit einer Untersetzungswertetabelle erkannt wird, die den Antriebssträngen durch die Position von Kopplern vorgegeben wird, die die Erstellung der im Verbrennungsmodus, im Elektromodus und im Hybridmodus realisierbaren Verhältnisse steuern.

**2.** Bestimmungsverfahren nach Anspruch 1, **dadurch gekennzeichnet, dass** die Komponenten [Verhältnis_Mth] und [Verhältnis_ME] des Vektors bei jedem von den zwei Antriebssträngen realisierten Verhältnis innerhalb von zwei Familien von realisierbaren getrennten Verhältnissen Bezugswerte annehmen.

**Claims**

**1.** Method for determining the current kinematic mode of a hybrid power train comprising a drive train transmitting the torque from a heat engine to discrete reduction ratios established by a first reducing gear, an electric drive train transmitting the torque from an electrical machine to several discrete reduction ratios established by a second reducing gear, and an output differential combining the movement of the two drive trains towards the wheels, in which the current kinematic mode is identified from the observation of the speed of rotation of the heat engine *N-Mth,* of the speed of rotation of the electrical machine *N_ME* and of the speed of rotation of the wheels *N_Roues* of the vehicle, and takes the form of a vector of the type *[Etat_coupleur_Mth; Ratio_Mth; Etat_coupleur_ME; Ratio_ME]* including the state of an input coupler of the heat engine and of the electrical machine in the power train and the reduction ratios of the two drive trains, the current kinematic mode being identified by comparing the ratios *[Ratio_Mth]* and *[Ratio_ME]* calculated from the observed speeds N-*Mth, N_ME* and *N_Roues,* and to a table of reduction values imposed on the drive trains by the position of couplers controlling the establishing of the ratios that can be produced in heat engine mode, in electrical mode and in hybrid mode.

**2.** Determination method according to Claim 1, **characterized in that** the components *[Ratio_Mth]* and *[Ratio_ME]* of the vector take reference values on each ratio produced by the two drive trains, within two families of discrete ratios that can be produced.

| C2<br>C1 | R3 | 0 | couplage |
|---|---|---|---|
| R1 | Hybride Autoroute 1 | ZEV Ville | Hybride Ville<br>Ou Thermique Ville |
| 0 | Autoroute Thermique | Point mort | Recharge |
| R2 | Hybride Autoroute 2<br>(si vitesse Vh < 110km/h) | ZEV Route | Hybride route<br>Ou Thermique route |

# Fig. 1

**Fig. 2**

**Fig. 3**

**EP 3 006 248 B1**

## RÉFÉRENCES CITÉES DANS LA DESCRIPTION

### Documents brevets cités dans la description

- WO 2012131259 A

- DE 102008041985